# EUROPÄISCHE PATENTANMELDUNG

(11) **EP 2 239 286 A1**
(43) Veröffentlichungstag der Anmeldung: **13.10.2010**
(21) Anmeldenummer: 09005157.4
(22) Anmeldetag: 08.04.2009
(51) Int. Cl.: C08G 18/08, C08G 18/12, C08G 18/32, C08G 18/42, C08G 18/66, C08G 18/75

(54) **Wässrige Bindemittel-Dispersion für Zweikomponenten-Lacke**

(71) Anmelder: Bayer MaterialScience AG, 51368 Leverkusen (DE)
(72) Erfinder: Irle Christoph, Dr., 41539 Dormagen (DE); Münzmay Thomas, 41539 Dormagen (DE)

(57) **Zusammenfassung**

Die Erfindung betrifft ein wässrige Bindemittel-Dispersion auf Basis von in Wasser dispergierbaren Carboxylat- und Hydroxylgruppen enthaltenden Polyesterpolyurethanharzen, ein Verfahren zu deren Herstellung und deren Verwendung als Bindemittel in Lacken, Beschichtungs- und Dichtmassen.

## Beschreibung

Die Erfindung betrifft eine wässrige Bindemittel-Dispersion auf Basis von in Wasser dispergierbaren Carboxylat- und Hydroxylgruppen enthaltenden Polyesterpolyurethanharzen, ein Verfahren zu deren Herstellung und deren Verwendung als Bindemittel in Lacken, Beschichtungs- und Dichtmassen.

Zweikomponenten-Polyurethanlacke des Standes der Technik haben aufgrund ihrer hervorragenden Eigenschaften eine große Bedeutung auf dem Beschichtungssektor. Von Nachteil dabei ist jedoch, dass zur Verarbeitung größere Mengen organischer Lösemittel erforderlich sind, die z.B. durch eine Nachverbrennung beseitigt werden müssen. In vielen, vor allem nichtindustriellen Anwendungsbereichen ist eine solche Nachverbrennung nicht durchführbar, so dass hier verstärkt festkörperreiche, vor allem jedoch wasserverdünnbare Beschichtungen gefordert werden, um die Lösemittelabgabe und die damit verbundene Umweltbelastung so gering wie möglich zu halten.

Die Verwendung von Wasser als flüssige Phase in Zweikomponenten-Polyurethanlacken mit freien Isocyanatgruppen erfordert sorgfältige Abstimmung der eingesetzten Rohstoffe, da Isocyanatgruppen nicht nur mit alkoholischen Hydroxylgruppen, sondern auch mit Wasser unter Harnstoff- und Kohlendioxidbildung reagieren. Dadurch werden in der Regel die Standzeit, die Verarbeitungszeit und die Qualität der Überzüge auf nicht praxisgerechte Werte reduziert.

In der EP-A 0 578 940 werden Polyester-Polyurethan-Dispersionen beschrieben, die als Aufbaukomponente lineare Polycarbonat-Diole enthalten. Diese Polyole eignen sich für die Verwendung in wässrigen 2K-Polyurethanlacken. Solche Systeme haben den Nachteil, dass die Trocknungsgeschwindigkeit zu niedrig für die Verwendung in Raumtemperatur - trocknenden Beschichtungen.

In der EP-A 0 791 614 werden Polyester-Polyurethan-Dispersionen beschrieben, die Hydroxycarbonsäuren als latent hydrophile Aufbaukomponenten enthalten. Diese Hydroxycarbonsäuren sind zumindest zum Teil über Estergruppen an das Polyester-Grundgerüst gebunden. Die resultierenden Dispersionen weisen eine für den Praxiseinsatz unzureichende Lagerstabilität auf.

Weiterhin werden in der EP-A 438 090 Polyester-Polyurethan-Dispersionen auf Basis von gering verzweigten Polyesterharzen beschrieben. Die resultierenden Beschichtungen zeichnen sich durch eine hohe Elastizität aus. Schnelltrocknende und Wetter- sowie Chemikalienbeständige Lacke können aus diesen Dispersionen jedoch nicht erhalten werden.

Aus der EP-A 0 496 205 sind bereits wässriges Zweikomponenten-Bindemittel auf Basis von in Wasser dispergierbaren Urethan-, Carboxylat- und Hydroxylgruppen enthaltenden Polyesterharzen in Kombination mit Polyisocyanaten bekannt. Diese weisen jedoch eine zu kurze Verarbeitungszeit (Potlife) sowie unzureichende Wetterbeständigkeit auf.

Aufgabe der vorliegenden Erfindung bestand in der Bereitstellung von verbesserten, wässrigen Bindemittel-Dispersionen zur Herstellung von Lacken, insbesondere Zweikomponenten(2K)-Lacken, die eine deutlich längere Verarbeitungszeit und somit ein längeres Potlife zeigen, verglichen zu den aus dem Stand der Technik bekannten Systemen. Außerdem sollten die resultierenden 2K-Lacke eine praxisgerechte Trocknungsgeschwindigkeit und Wetterbeständigkeit aufweisen.

Es wurde nun gefunden, dass der Einsatz von niedermolekularen, verzweigten Polyesterpolyolen als Bausteine für die Polyesterpolyurethan-Dispersion die oben genannte Aufgabe lösen.

Gegenstand der vorliegenden Erfindung ist ein wässrige Bindemittel-Dispersion enthaltend ein Carboxylat- und Hydroxylgruppen enthaltendes Polyesterpolyurethan A), **dadurch gekennzeichnet, dass** das Polyesterpolyurethan A) ein zahlenmittleres Molekulargewicht Mₙ von 700 bis 3000 aufweist und als Aufbaukomponenten
a) verzweigte Polyesterpolyole eines zahlenmittleren Molekulargewichts Mₙ von kleiner 1.500, bevorzugt kleiner 1.000 g/ mol,
b) ein oder mehrere Diol/e und/oder Triol/e des Molekulargewichtsbereichs von 62 bis 240,
c) eine oder mehrere 2,2-Bis(hydroxymethyl)alkancarbonsäure/n mit insgesamt mindestens 5 Kohlenstoffatomen und
d) mindestens einer difunktionellen, cycloaliphatischen Isocyanatkomponente des Molekulargewichtsbereichs von 166 bis 2000
enthält.

Bei der Komponente A) handelt es sich um ein Carboxylat- und Hydroxylgruppen enthaltendes Polyesterpolyurethan, welches ein zahlenmittleres Molekulargewicht Mₙ (Gewichtsmittel) von 700 bis 3.000, bevorzugt von 1.000 bis 2.500, eine Hydroxylzahl von 20 bis 240, bevorzugt von 45 bis 190 mg KOH/g Substanz, eine Säurezahl (bezogen auf alle Carboxylgruppen, die dabei zu 25 bis 100, bevorzugt zu 40 bis 100 % in Carboxylatform vorliegen) von 10 bis 45, bevorzugt von 14 bis 33 mg KOH/g Substanz und einem Urethangruppengehalt von 2,5 bis 15,0, bevorzugt von 5,0 bis 12,5 Gew.-% aufweist, wobei die Werte für Hydroxylzahl, Säurezahl und Urethangruppengehalt sich jeweils auf 100 % Festgehalt der Komponente A) beziehen.

Die Komponente A) kommt bei der Herstellung der erfindungsgemäßen Bindemittel im allgemeinen in Form von 15 bis 65 Gew.-%igen, bevorzugt von 25 bis 55 Gew.-%igen wässrigen Lösungen bzw. Dispersionen zum Einsatz, die im allgemeinen eine Viskosität von 10 bis 30 000, bevorzugt von 50 bis 10 000 mPa.s bei 23°C und pH-Werte von 5 bis 10, bevorzugt von 6 bis 9 aufweisen.

In Abhängigkeit vom Molekulargewicht der Carboxylat- und Hydroxylgruppen enthaltenden Polyesterpolyurethanharze A), dem Gehalt an Carboxyl-bzw. Carboxylatgruppen, sowie von der Art des eingesetzten Neutralisationsmittels und der gegebenenfalls mitverwendeten Hilfslösemittel liegen die Polyesterharze A) als Lösung oder als Dispersion vor, im allgemeinen sind jedoch sowohl gelöste als auch dispergierte Anteile vorhanden.

Geeignet als Komponente a) sind verzweigten Polyesterpolyole mit einer Hydroxylzahl von 50 bis 500, bevorzugt von 80 bis 350 mg KOH/g Substanz und einer Säurezahl kleiner 12, bevorzugt kleiner 8 mg KOH/g Substanz.

Bei der Aufbaukomponente a) handelt es sich um verzweigte Polyesterpolyole mit den oben genannten Kenndaten. Der Begriff "verzweigt" soll hierbei bedeuten, dass die Polyesterpolyole im statistischen Mittel pro Molekül 0,7, bevorzugt mindestens eine Verzweigungsstelle aufweisen.

Die Herstellung der verzweigten Polyesterpolyole a) erfolgt durch Polykondensation von a1) 0 bis 60, bevorzugt 0 bis 55 Gew.-% Monocarbonsäuren, a2) 6 bis 65, bevorzugt 11 bis 58 Gew.-% Di- und/oder Tricarbonsäuren bzw. deren Anhydriden, a3) 10 bis 70, bevorzugt 17 bis 63 Gew.-% di- und/oder höherfunktionellen Alkoholen, a4) 0 bis 35, bevorzugt 0 bis 15 Gew.% Monoalkoholen, a5) 0 bis 30, bevorzugt 0 bis 20 Gew.-% einer Aufbaukomponente, die im Sinne einer Polyadditions- oder Polykondensationsreaktion unter Bildung von Ester- und/oder Amidgruppen mindestens difunktionell ist, wobei sich die Prozentangaben von a1) bis a5) zu 100 Gew.-% ergänzen.

Die Umsetzung erfolgt gegebenenfalls unter Zuhilfenahme üblicher Veresterungskatalysatoren bevorzugt nach dem Prinzip einer Schmelz-oder Azeotropkondensation bei Temperaturen von 140 bis 240°C.

Tri- und höherfunktionelle Aufbaukomponenten [insbesondere a2) und/oder a3)] müssen auf jeden Fall in solchen Mengen mitverwendet werden, dass die obengenannte Bedingung bezüglich des Verzweigungsgrades erfüllt ist. Im allgemeinen liegt der Anteil an tri- und/oder höherfunktionellen Aufbaukomponenten a2) und/oder a3) bei mindestens 8 Gew.-%, bevorzugt mindestens 13 Gew.-%, bezogen auf das Gesamtgewicht der Ausgangskomponenten a1) bis a5).

Bei der Ausgangskomponente a1) handelt es sich um eine Monocarbonsäurekomponente, die zumindest aus einer Monocarbonsäure des Molekulargewichtsbereichs von 112 bis 340 besteht. Geeignete Monocarbonsäuren sind z.B. Benzoesäure, tert.-Butylbenzoesäure, Hexahydrobenzoesäure, gesättigte Fettsäuren wie z.B. 2-Ethylhexansäure, Isononansäure, Kokosölfettsäure, hydrierte technische Fettsäuren bzw. Fettsäuregemische, Dekansäure, Dodekansäure, Tetradekansäure, Stearinsäure, Palmitinsäure, Docosansäure, ungesättigte Fettsäuren, wie z. B. Sojaölfettsäure, Ricinusölfettsäure, Sorbinsäure, Erdnußölfettsäure, Konjuenfettsäure, Tallölfettsäure, Safflorölfettsäure sowie Gemische dieser oder anderer Monocarbonsäuren.

Bei der Ausgangskomponente a2) handelt es sich um Di- und/oder Tricarbonsäuren bzw. deren Anhydride des Molekulargewichtsbereichs 98 bis 600. Geeignet sind z.B. Phthalsäure(anhydrid), Isophthalsäure, Terephthalsäure, Maleinsäure(anhydrid), Bernsteinsäure(anhydrid), Fumarsäure, Adipinsäure, Sebacinsäure, Azelainsäure, Dimerfettsäuren, Trimerfettsäure, Trimellithsäure(anhydrid) und Gemische dieser oder anderer Säuren. Bevorzugt werden hydrierte Derivate der Phthalsäure/- anhydrid eingesetzt und besonders bevorzugt Tetrahydrophthalsäure.

Bei der Ausgangskomponente a3) handelt es sich um Diole, Triole, Tetraole bzw. höherwertige Alkoholkomponenten des Molekulargewichtsbereichs 62 bis 400. Geeignet sind z.B. Ethylenglykol, 1, 2- und 1,3-Propylenglykol, 1,3-, 1,4-, 2,3-Butandiol, 1,6-Hexandiol, 2,5-Hexandiol, Trimethylhexandiol, Diethylenglykol, Triethylenglykol, hydrierte Bisphenole, 1,4-Cyclohexandiol, 1,4-Cyclohexandimethanol, Neopentylglykol, Tricyclodecandiol, 1,4-Butendiol, Trimethylpropan, Glycerin, Pentaerythrit, Trimethylpentandiol, Dipentaerythrit, Ditrimethylolpropan und Gemische dieser oder anderer mehrwertiger Alkohole.

Bei der Ausgangskomponente a4) handelt es sich um Monoalkohole des Molekulargewichtsbereichs 100 bis 290, wie z.B. n-Hexanol, Cyclohexanol, Decanol, Dodecanol, Tetradecanol, Octanol, Octadecanol, natürliche Fettalkoholgemische, wie z.B. Ocenol^{®} 110/130R (Fa. Henkel, Düsseldorf, DE) und Gemische dieser und anderer Alkohole.

Bei der Ausgangskomponente a5) handelt es sich um Aufbaukomponenten, die im Sinne einer Polyadditions- oder Polykondensationsreaktion unter Bildung von Ester- und/oder Amidgruppen mindestens difunktionell sind und ein zahlenmittleres Molekulargewicht Mₙ von 61 bis 350 aufweisen. Geeignet sind beispielsweise Hydroxycarbonsäuren, Lactone, Lactame, Aminoalkohole und/oder Aminocarbonsäuren, wie z.B. Dimethylolpropionsäure, Milchsäure, Apfelsäure, Weinsäure, ε-Caprolacton, Aminoethanol, Aminopropanol, Diethanolamin, Aminoesslgsäure, Aminohexansäure oder ε-Caprolactam.

Im Falle einer azeotropen Veresterung wird das Schleppmittel, üblicherweise Isooctan, Xylol, Toluol oder Cyclohexan nach beendeter Reaktion im Vakuum abdestilliert.

Bei der Komponente b) handelt es sich um mindestens ein Diol oder Triol, bevorzugt ein Triol, des zahlenmittleren Molekulargewichtsbereichs von 62 bis 240. Besonders bevorzugt sind Neopentylglykol, 1,4-Cyclohexandimethanol, 1,6-Hexandiol und/oder Ethylenglykol, ganz besonders bevorzugt ist Neopentylglykol.

Bei der Komponente c) handelt es sich um mindestens eine 2,2-Bis-(hydroxymethyl)-alkancarbonsäure mit insgesamt mindestens 5 Kohlenstoffatomen, bevorzugt um 2,2-Bis-(hydroxymethyl)-propionsäure (Dimethylolpropionsäure) oder um ein t-Aminsalz einer solchen Säure, beispielsweise um das Triethylamin-Salz der Dimethylolpropionsäure.

Bei der Komponente d) handelt es sich um mindestens eine, mindestens difunktionelle Isocyanatkomponente des zahlenmittleren Molekulargewichtsbereichs von 166 bis 2000, bevorzugt um eine difunktionellen, cycloaliphatischen Isocyanatkomponente. Geeignet sind beispielsweise Hexamethylendiisocyanat, Perhydro-2,4 und 4,4'-diphenylmethandiisocyanat, Isophorondiisocyanat, Toluylendiisocyanat, Naphthalindiisocyanat und andere Isocyanate wie sie z.B. in "Methoden der organischen Chemie" (Houben-Weyl, Bd. 14/2, 4. Auflage Georg Thieme Verlag Stuttgart 1963, S. 61-70) beschrieben werden.

Ebenfalls geeignet als Komponente d) sind z.B. Lackpolyisocyanate auf Hexamethylendüsocyanat, Isophorondiisocyanat-, Diphenylmethandiisocyanat und Toluylendüsocyanatbasis, die z.B. Urethangruppen, Uretdiongruppen, Isocyanurat- und/oder Biuretgruppen aufweisen.

Bevorzugt eingesetzt werden Hexamethylendiisocyanat, Isophorondiisocyanat, Perhydro-2,4'-und 4,4'-diphenylmethandiisocyanat und Lackpolyisocyanate auf Hexamethylendiisocyanat und/oder Isophorondiisocyanatbasis. Ebenfalls geeignet sind Gemische der genannten und auch anderer Polyisocyanate. Besonders bevorzugt sind Isophorondiisocyanat, Perhydro-2,4'- und 4,4'-diphenylmethandiisocyanat.

Die Carboxylat- und Hydroxylgruppen enthaltenden Polyesterpolyurethanharze A) enthalten als Aufbaukomponenten

65 bis 91,8 Gew.-%, bevorzugt 70 bis 86,5 Gew.-% der Komponente a), 0,2 bis 7 Gew.-%, bevorzugt 0,5 bis 3 Gew.-% der Komponente b), 2,0 bis 7,5 Gew.-%, bevorzugt 3,0 bis 6,5 Gew.-% der Komponente c), 6 bis 30 Gew.-%, bevorzugt 10 bis 23 Gew.-% der Komponente d),
wobei sich die zu a) bis d) gemachten Prozentangaben zu 100 Gew.-% ergänzen.

Die Herstellung der Carboxylat- und Hydroxylgruppen enthaltenden Polyesterpolyurethanharze A) erfolgt durch eine an sich bekannte Umsetzung von Komponenten a) bis d) in 40 bis 99 %iger organischer Lösung, gegebenenfalls auch in Substanz, d.h. 100 %ig, wobei die Komponenten a), b) und c) in einem organischen Lösemittel vorgelegt und in Gegenwart von 0 bis 2,5 Gew.-% geeigneter Katalysatoren bei Temperaturen von 40 bis 140°C mit Teil d) derart zur Reaktion gebracht werden, dass nach der Umsetzung praktisch keine freien NCO-Gruppen mehr nachweisbar sind und dann das Reaktionsgemisch in Wasser dispergiert oder gelöst wird, wobei die in das Reaktionsprodukt eingeführten Carboxylgruppen während der Umsetzung oder vor bzw. nach des Dispergier- bzw. Löseschritts durch Zugabe einer Base zu 25 bis 100 % in Carboxylatgruppen überführt werden und wobei vor, während oder nach der Herstellung der Dispersion bzw. Lösung das organische Lösemittel gegebenenfalls teilweise oder ganz destillativ aus dem Reaktionsgemisch entfernt wird.

Geeignete Lösungsmittel zur Herstellung der Polyesterpolyurethanharze A) sind z.B. N-Methylpyrrolidon, Diethylenglykoldimethylether, Methylethylketon, Methylisobutylketon, Aceton, Xylol, Toluol, Butylacetat bzw. Gemische dieser oder anderer Lösemittel. Die verwendeten organischen Lösemittel können vor, während oder nach dem Dispergierschritt ganz oder teilweise, gegebenenfalls azeotrop und/oder durch Anlegen eines Vakuums bzw. eines verstärkten Inertgasstromes aus dem Reaktionsgemisch entfernt werden.

Geeignete Katalysatoren für die Urethanisierungsreaktion können z.B. sein: Triethylamin, Zinn-n-octoat, Dibutylzinnoxid, Dibutylzinndilaurat und andere gebräuchliche Katalysatoren.

Vor oder während des Dispergierschrittes werden durch Zugabe von mindestens einer Base 25 bis 100 %, bevorzugt 45 bis 100 % der eingebauten Säuregruppe in Salzgruppen überführt. Oftmals ist auch ein Überschuss der Base zweckmäßig, um so gewisse Eigenschaften, beispielsweise die Pigmentverträglichkeit der in Wasser dispergierten Polyesterpolyole zu verbessern.

Geeignete Basen können z.B. sein: Ammoniak, N-Methylmorpholin, Triethylamin, Dimethylethanolamin, Methyldiethanolamin, Triethanolamin, Morpholin, Tripropylamin, Ethanolamin, Triisopropanolamin, 2-Amino-2-methyl-1-propanol bzw. Gemische dieser und anderer Neutralisationsmittel. Ebenfalls geeignet, jedoch weniger bevorzugt als Neutralisationsmittel sind Natriumhydroxid, Lithiumhydroxid oder Kaliumhydroxid. Bevorzugte Neutralisationsmittel sind Ammoniak, Dimethylethanolamin oder Triethylamin sowie Diisopropylethylamin.

Nach der Urethanisierungsreaktion können zur Erzielung bestimmter Eigenschaften auch geringe Mengen weiterer organischer Lösemittel, wie z.B. Ethanol, Propanol, Butanol, Butylglykol, Hexanol, Octanol, Butyldiglykol, Ethyldiglykol, Methyldiglykol oder Methoxypropanol zugesetzt werden.

Im Dispergierschritt kann alternativ das Wasser/Neutralisationsmittelgemisch zum Harz, das Wasser zum Harz-/Neutralisationsmittelgemisch, das Harz zum Wasser/Neutralisationsmittelgemisch oder das Harz-/Neutralisationsmittelgemisch zum Wasser gegeben werden. Die Dispergierbarkeit der Harze in Wasser kann durch Mitverwendung von externen Emulgatoren, wie z.B. ethoxyliertes Nonylphenol beim Dispergieren verbessert werden.

Der Anteil an organischen Lösungsmitteln liegt unter 10 Gew.-%, bevorzugt unter 6 Gew.-% und besonders bevorzugt unter 4 Gew.-%.

Die erfindungsgemäßen wässrigen Bindemittel-Dispersionen, enthaltend die Carboxylat- und Hydroxylgruppen enthaltenden Polyesterpolyurethanharze A) werden bevorzugt in Kombination mit Vernetzerharzen B), bevorzugt Polyisocyanaten, als Zweikomponenten(2K)-Lack eingesetzt. Der Einsatz von blockierten Polyisocyanaten in Einkomponenten(1K)-Lacken ist ebenfalls möglich.

Gegenstand der vorliegenden Erfindung sind daher auch wässrige Zweikomponenten(2K)-Lacke, enthaltend die erfindungsgemäßen wässrigen Bindemittel-Dispersionen sowie mindestens ein Vernetzerharz B).

Die erfindungsgemäßen wässrigen Bindemittel-Dispersionen werden vor Applikation mit Vernetzerharzen B) vermischt. Bevorzugt werden unblockierte Polyisocyanate in den Mengenverhältnissen 1:20 bis 1:2, bevorzugt 1:10 bis 1:3, jeweils bezogen auf das Gewicht fester Bestandteile des erfindungsgemäßen wässrigen Bindemittels, enthaltend Carboxylat- und Hydroxylgruppen enthaltenden Polyesterpolyurethanharze A) und des Vernetzerharzes B).

Geeignete Vernetzerharze B) sind Polyisocyanate mit freien Isocyanatgruppen. Bei Verwendung des erfindungsgemäßen wässrigen Bindemittels in einem 1K-Lack können jedoch auch blockierte Polyisocyanate eingesetzt werden. Ebenso ist es möglich, Aminoplastharze bzw. beliebige Gemische derartiger Vernetzerharze als Vernetzerharze B) einzusetzen.

Geeignete Aminoplastharze sind beispielsweise wasserverdünnbare bzw.-dispergiertbare Melamin- bzw. Harnstoff-Formaldehyd-Kondensationsprodukte. Die Melaminharze können jedoch auch ganz oder teilweise durch andere vernetzende Aminoplaste ersetzt werden.

Bevorzugt werden als Vernetzerharze B) freie Isocyanatgruppen enthaltende Polyisocyanate eingesetzt. Als freie Isocyanatgruppen enthaltende Polyisocyanatvernetzer B) sind beispielsweise organische Polyisocyanate mit aliphatisch, cycloaliphatisch, araliphatisch und/oder aromatisch gebundenen, freien Isocyanatgruppen, die bei Raumtemperatur flüssig sind, geeignet. Solche Polyisocyanatvernetzer B) weisen eine Viskosität von 50 bis 10 000, bevorzugt von 50 bis 1 500 mPa.s auf. Besonders bevorzugt handelt es sich bei der Polyisocyanatkomponente B) um Polyisocyanate oder Polyisocyanatgemisch mit ausschließlich aliphatisch und/oder cycloaliphatisch gebundenen Isocyanatgruppen einer zwischen 2,2 und 5,0 liegenden (mittleren) NCO-Funktionalität und einer Viskosität bei 23°C von 50 bis 1 500 mPa.s.

Falls erforderlich, können die Polyisocyanate in Abmischung mit inerten Lösungsmitteln zum Einsatz gelangen, um die Viskosität auf einen Wert innerhalb der genannten Bereiche abzusenken.

Sehr gut geeignet sind beispielsweise "Lackpolyisocyanate" auf Basis von Hexamethylendiisocyanat oder von 1-Isocyanato-3,3,5-trimethyl-5-isocyanatomethyl-cyclohexan (IPDI) und/oder Vis(isocyanatocyclohexyl)-methan. Unter "Lackpolyisocyanaten" auf Basis dieser Diisocyanate sind die an sich bekannten Biuret-, Urethan-, Uretdion-und/oder Isocyanuratgruppen aufweisenden Derivate dieser Diisocyanate zu verstehen, die im Anschluß an ihre Herstellung in bekannter Weise, vorzugsweise durch Destillation von überschüssigem Ausgangsdiisocyanat bis auf einen Restgehalt von weniger 0,5 Gew.-% befreit worden sind. Zu den bevorzugten, erfindungsgemäß zu verwendenden, aliphatischen Polyisocyanaten gehören den obengenannten Kriterien entsprechende, Biuretgruppen aufweisende Polyisocyanate auf Basis von Hexamethylendiisocyanat, wie sie beispielsweise nach den Verfahren der US-Patentschriften 3 124 605, 3 358 010, 3 903 126, 3 903 127 oder 3 976 622 erhalten werden können, und die aus Gemischen von N,N',N"-Tris-(6-isocyanatohexyl)-biuret mit untergeordneten Mengen seiner höheren Homologen bestehen, sowie die den genannten Kriterien entsprechenden cyclischen Trimerisate von Hexamethylendiisocyanat, wie sie gemäß US-PS 4 324 879 erhalten werden können, und die im wesentlichen aus N,N',N"-Tris-(6-isocyanatohexyl)-isocyanurat im Gemisch mit untergeordneten Mengen an seinen höheren Homologen bestehen.

Ebenfalls geeignet Polyisocyanatvernetzer sind solche, die durch den Einbau von Polyether- und/oder Salzgruppen hydrophiliert sind.

Erfindungsgemäße wässrige Bindemittel-Dispersionen, die Aminoplastharze oder blockierte Polyisocyanate als Vernetzerharze B) enthalten bzw. Beschichtungsmittel oder Dichtmassen auf Basis derartiger Bindemittelkombinationen, stellen Hitze-vernetzbare Einkomponenten(1K)-Systeme dar, die bei Raumtemperatur lagerfähig sind. Entsprechende Systeme, die als Vernetzerharze B) Polyisocyanate mit freien Isocyanatgruppen enthalten, stellen Zweikomponenten(2K)-Systeme dar, die durch Abmischung der Einzelkomponenten erhalten werden und bei Raumtemperatur eine nur begrenzte Topfzeit aufweisen.

Erfindungsgemäß wird der wässrige Zweikomponenten(2K)-Lacks in der Weise hergestellt, wobei in einem ersten Reaktionsschritt ein Polyesterpolyurethan A) mit den oben genannten Kenndaten durch Umsetzung bei 40 bis 140°C, gegebenenfalls in Gegenwart von bis zu 60 Gew.-%, bezogen auf das Gesamtgewicht des Reaktionsgemisches an inerten Lösungsmitteln, durch Umsetzung von Ausgangsmaterialien a) bis d) der obengenannten Art in den obengenannten Mengenverhältnissen herstellt, anschließend in einem zweiten Reaktionsschritt das so erhaltene Harz in Wasser löst bzw. dispergiert, wobei vor und/oder während dieses Schrittes 25 bis 100 % der Säuregruppen durch Neutralisation in Salzgruppen überführt werden und man schließlich in einem dritten Reaktionsschritt, gegebenenfalls nach Zusatz von Hilfs- und Zusatzmitteln die Vernetzerkomponente B) in der so erhaltenen wässrigen Dispersion des Polyesterpolyurethans dispergiert bzw. löst.

Vor der Zugabe der Vernetzerkomponente B) können der Komponente A) die üblichen Hilfs- und Zusatzmittel der Lacktechnologie einverleibt werden. Hierzu gehören beispielsweise Entschäumungsmittel, Verdickungsmittel, Verlaufshilfsmittel, Pigmente, Dispergierhilfsmittel für die Pigmentverteilung und dergleichen.

In dem wässrigen Zweikomponenten-Lack liegen die Polyesterpolyurethane A) als wesentliche Bindemittelkomponente vor. Außerdem können jedoch neben den Polyesterpolyurethanen A) und den Vernetzerharzen B) gegebenenfalls noch weitere hydroxyfunktionelle Lackharze C) vorliegen, deren Menge, bezogen auf Festkörper, bis zu 500, bevorzugt bis zu 250 Gew.-% der Menge der Komponente A) betragen kann.

Gegebenenfalls mitverwendete, hydroxyfunktionelle Lackharze C) sind beispielsweise wasserverdünnbare, nichtionische oder anionische Bindemittel des Standes der Technik auf Polyepoxid-, Polyester-, Polyurethan-, Polyether-, Polyamin-, Polyolefin-, Polydien-und/oder Polyacrylatbasis, wobei jeweils durch eine Vorprüfung die Verträglichkeit ermittelt werden muß.

Zu den bevorzugten Anwendungsgebieten für die erfindungsgemäße wässrige Bindemittel-Dispersion gehört die Verwendung in Raumtemperatur-härtenden bzw. unter forcierter Trockung bei 30 bis 80 °C ausgehärteten Klar- oder Decklacken. Die erfindungsgemäßen wässrigen Bindemittel-Dispersionen eignen sich z.B. als Bindemittelkomponente für wässrige Metall-, Kunststoff- oder Holz- oder Papierlacke, sowie als Bindemittelkomponente für Grundlacke für mineralische Substrate. Auch die Herstellung von festkörperreichen Einschichtdecklacken unter Verwendung der erfindungsgemäßen wässrigen Bindemittel ist möglich. Die erfindungsgemäßen wässrigen Bindemittel eignen sich auch zur Herstellung von lösungsmittelarmen Dichtmassen, sowie zur Herstellung von Klebstoffen.

### Beispiele

Soweit nicht abweichend angegeben sind alle Prozentangaben als Gewichtsprozent zu verstehen.

### Verwendete Substanzen und Abkürzungen:

| | |
|---|---|
| BYK^{®} 028: | Entschäumer (BYK-Chemie, Wesel, DE) |
| Tego-Wet^{®} KL 245: | Benetzungsadditiv (Tego Chemie Sevice, Essen, DE) |
| Tego Flow ® 425: | Verlaufsadditiv (Tego Chemie Sevice, Essen, DE) |
| Bayhydur^{®} XP 2655: | Hydrophiles, aliphatisches Polyisocyanat auf Basis Hexamethylendiisocyanat (Bayer MaterialScience AG, Leverkusen DE) |
| MPA: | 1-Methoxy-2-propylacetat |
| LKS: | Laserkorrelationsspektroskopie |

Die Bestimmung der Festkörpergehalte erfolgte nach DIN-EN ISO 3251.

NCO-Gehalte wurden, wenn nicht ausdrücklich anders erwähnt, volumetrisch gemäß DIN-EN ISO 11909 bestimmt.

Chemikalienbeständigkeiten wurden nach DIN 68861, Teil 1 bestimmt.

### Beispiel 1 Polyesterpolyol 1

In ein 151-Reaktionsgefäß mit Rührer, Heizvorrichtung und Wasserabscheider mit Kühlvorrichtung wurden 6381 g Tetrahydro-Phthalsäureanhydrid, 2446 g Trimethylolpropan und 4429 g Neopentylglykol eingewogen und unter Stickstoff in einer Stunde auf 140°C aufgeheizt. In weiteren 9 Stunden wurde auf 220°C aufgeheizt und so lange bei dieser Temperatur kondensiert, bis eine Säurezahl von 2,9 erreicht war. Das so erhaltene Polyesterpolyol hatte eine Viskosität (bestimmt als Auslaufzeit einer 65 %igen Lösung des Polyesters in Methoxypropylacetat im DIN 4-Becher bei 23°C) von 75 Sekunden und eine OH-Zahl von 243 mg KOH/g.

### Beispiel 2 Polyesterpolyol 2

In ein 151-Reaktionsgefäß mit Rührer, Heizvorrichtung und Wasserabscheider mit Kühlvorrichtung wurden 2420 g Tetrahydro-Phthalsäureanhydrid, 842 g Trimethylolpropan und 1525 g Neopentylglykol eingewogen und unter Stickstoff in einer Stunde auf 140°C aufgeheizt. In weiteren 9 Stunden wurde auf 220°C aufgeheizt und so lange bei dieser Temperatur kondensiert, bis eine Säurezahl von 2,6 erreicht war. Das so erhaltene Polyesterpolyol hatte eine Viskosität (bestimmt als Auslaufzeit einer 60 %igen Lösung des Polyesters in Methoxypropylacetat im DIN 4-Becher bei 23°C) von 50 Sekunden und eine OH-Zahl von 193 mg KOH/g.

### Beispiel 3 Hydroxyfunktionelle PUR-Dispersion

In einem 61-Reaktionsgefäß mit Kühl-, Heiz- und Rührvorrichtung wurden in einer Stickstoffatmosphäre 1005 g des Polyesterpolyols aus Beispiel 1 vorgelegt und zusammen mit 12 g Trimethylolpropan, 90 g Dimethylolpropionsäure und 1,9 g Zinn-(II)-octoat in 808 g Aceton auf 58 °C aufgeheizt und 30 min homogenisiert. Anschließend wurden 393 g Desmodur^{®} W unter kräftigem Rühren zugegeben und das Gemisch so lange bei dieser Temperatur gehalten, bis sich keine NCO-Gruppen mehr feststellen ließen.

Anschließend wurden 53,8 g Dimethylethanolamin (Neutralisationsgrad 90 %) zugesetzt, 15 Minuten homogenisiert und mit 1833 g demineralisiertem Wasser dispergiert. Anschließend wurde das Aceton abdestilliert. Die so erhaltene wässrige Polyurethanharz-Dispersion hatte einen OH-Gehalt (100 %ig) von 3,5 %, eine Säurezahl (100 %ig) von 29,2, eine mittlere Teilchengröße (LKS) von 91 nm und eine Viskosität von ca. 1770 mPas (23°C; D = 40 s⁻¹) bei einem Festkörpergehalt von 40,9 Gew.-%.

### Beispiel 4 Hydroxyfunktionelle PUR-Dispersion

In einem 61-Reaktionsgefäß mit Kühl-, Heiz- und Rührvorrichtung wurden in einer Stickstoffatmosphäre 1124,7 g des Polyesterpolyols aus Beispiel 2 vorgelegt und zusammen mit 12 g Trimethylolpropan, 90 g Dimethylolpropionsäure und 1,9 g Zinn-(II)-octoat in 808 g Aceton auf 58 °C aufgeheizt und 30 min homogenisiert. Anschließend wurden 273,3 g Isophorondiisocyanat unter kräftigem Rühren zugegeben und das Gemisch so lange bei dieser Temperatur gehalten, bis sich keine NCO-Gruppen mehr feststellen ließen.

Anschließend wurden 53,8 g Dimethylethanolamin (Neutralisationsgrad 90 %) zugesetzt, 15 Minuten homogenisiert und mit 1833 g demineralisiertem Wasser dispergiert. Anschliessend wurde das Aceton abdestilliert. Die so erhaltene wässrige Polyurethanharz-Dispersion hatte einen OH-Gehalt (100 %ig) von 3,5 %, eine Säurezahl (100 %ig) von 29,7, eine mittlere Teilchengröße (LKS) von 65 nm und eine Viskosität von ca. 1890 mPas (23°C; D = 40 s⁻¹) bei einem Festkörpergehalt von 45,4 Gew.-%.

### Beispiel 5 Vergleich: Hydroxyfunktionelle PUR-Dispersion

gemäß EP-A 496 205, Beispiel A7

**Tabelle 1: Lackformulierungen / Angaben in Gew.%:**

| **PU Dispersion** | **Beispiel 3** | **Beispiel 4** | **Beispiel 5** |
|---|---|---|---|
| Dispersion | 62,6 | 54,9 | 62,6 |
| Byk ^{®} 028 | 0,5 | 0,5 | 0,5 |
| Tego Wet ^{®} KL 270 | 0,3 | 0,3 | 0,3 |
| Tego Flow ^{®} 425 | 0,1 | 0,1 | 0,1 |
| Wasser | 19,5 | 27,2 | 19,5 |
| **Komponente A** | 83,0 | 83,0 | 83,0 |
| Bayhydur ^{®} XP 2655 (80%-ig in MPA) **Komponente B** | 17 | 17 | 17 |
| **Summe** | 100,0 | 100,0 | 100,0 |

### Lackformulierungen

Die Polester-Polyurethan-Dispersionen aus Beispiel 3 und 4 wurden gemäß o.a. Formulierungen zu wässrigen 2K Polyurethan-Lacken verarbeitet. Die Vermischung der Komponenten A und B erfolgte durch Rühren mit einem Propellerrührer bei 1.000 U/ min für 3 min. Aus den so erhaltenen Formulierungen wurden sofort Filme mit einem 200 µm - Rakel auf ein Substrat aus Melaminfolie auf einem MDF - Träger aufgerakelt. Nach einer Ablüftzeit von 30 min wurden die so erhaltenen Klarlacke 16 h bei 50 °C ausgehärtet.

Anschliessend wurden Glanz und Härte sowie Chemikalienbeständigkeit gegen Kaffee und Rotwein nach DIN 68861 1b bestimmt.

In Abständen von jeweils 30 min Standzeit des 2K-Systems wurden aus der Mischung der beiden Komponenten erneut Lacke aufgerakelt, bei 50 °C für 16 h gehärtet und erneut o. a. Tests durchgeführt. Als Ende des Potlifes soll hier die Standzeit verstanden werden, nach der die Prüfergebnisse hinsichtllich Glanz, Härte und Chemikalienbeständigkeit erstmals vom 0-Wert abweichen.

**Tabelle 2: Prüfergebnisse**

| | Härte | Glanz | Potlife | Chemikalienbeständigkeit |
|---|---|---|---|---|
| Polyol | Pendelhärte nach König / s | ASTM D 523 20°/60° | Stunden | Kaffee/ Rotwein* |
| Beispiel 3 | 171 | 84 / 91 | 8,5 | 5 / 5 |
| Beispiel 4 | 178 | 81 / 90 | 8,0 | 5 / 5 |
| Beispiel 5 | 120 | 85 / 92 | 6,0 | 3 / 4 |

| | | | | |
|---|---|---|---|---|
| * 5 = keine Änderung; 0 = völlig zerstört | | | | |

## Patentansprüche

**1.** Wässrige Bindemittel-Dispersion enthaltend ein Carboxylat- und Hydroxylgruppen enthaltendes Polyesterpolyurethan A), **dadurch gekennzeichnet, dass** das Polyesterpolyurethan A) ein zahlenmittleres Molekulargewicht Mₙ von 700 bis 3000 aufweist und als Aufbaukomponenten
a) verzweigte Polyesterpolyole eines zahlenmittleren Molekulargewichts Mₙ von kleiner 1.500,
b) ein oder mehrere Diol/e und/oder Triol/e des Molekulargewichtsbereichs von 62 bis 240,
c) eine oder mehrere 2,2-Bis(hydroxymethyl)alkancarbonsäure/n mit insgesamt mindestens 5 Kohlenstoffatomen und
d) mindestens einer difunktionellen, cycloaliphatischen Isocyanatkomponente des Molekulargewichtsbereichs von 166 bis 2000
enthält.

**2.** Wässrige Bindemittel-Dispersion gemäß Anspruch 1, **dadurch gekennzeichnet, dass** das Carboxylat- und Hydroxylgruppen enthaltende Polyesterpolyurethan A) ein zahlenmittleres Molekulargewicht Mₙ (Gewichtsmittel) von 700 bis 3.000, eine Hydroxylzahl von 20 bis 240 mg KOH/g Substanz, eine Säurezahl (bezogen auf alle Carboxylgruppen, die dabei zu 25 bis 100 % in Carboxylatform vorliegen) von 10 bis 45 mg KOH/g Substanz und einem Urethangruppengehalt von 2,5 bis 15,0 Gew.-% aufweist, wobei die Werte für Hydroxylzahl, Säurezahl und Urethangruppengehalt sich jeweils auf 100 % Festgehalt der Komponente A) beziehen.

**3.** Wässrige Bindemittel-Dispersion gemäß Anspruch 1, **dadurch gekennzeichnet, dass** das Polyesterpolyol a) ein zahlenmittleres Molekulargewicht Mₙ von kleiner 1.000 g/ mol aufweist.

**4.** Wässrige Bindemittel-Dispersion gemäß Anspruch 1, **dadurch gekennzeichnet, dass** die Carboxylat- und Hydroxylgruppen enthaltenden Polyesterpolyurethanharze A) als Aufbaukomponenten 65 bis 91,8 Gew.-% der Komponente a), 0,2 bis 7 Gew.-% der Komponente b), 2,0 bis 7,5 Gew.-% der Komponente c), 6 bis 30 Gew.-% der Komponente d) enthalten, wobei sich die zu a) bis d) gemachten Prozentangaben zu 100 Gew.-% ergänzen.

**6.** Wässrige Bindemittel-Dispersion gemäß Anspruch 1, **dadurch gekennzeichnet, dass** die Polyesterpolyole a) als Aufbaukomponenten a1) 0 bis 60 Gew.-% Monocarbonsäuren, a2) 6 bis 65 Gew.-% Di-und/oder Tricarbonsäuren bzw. deren Anhydriden, a3) 10 bis 70 Gew.-% di-und/oder höherfunktionellen Alkoholen, a4) 0 bis 35 Gew.-% Monoalkoholen, a5) 0 bis 30 Gew.-% einer Aufbaukomponente, die im Sinne einer Polyadditions- oder Polykondensationsreaktion unter Bildung von Ester- und/oder Amidgruppen mindestens difunktionell ist, wobei sich die Prozentangaben von a1) bis a5) zu 100 Gew.-% ergänzen, enthalten.

**7.** Wässrige Bindemittel-Dispersion gemäß Anspruch 6, **dadurch gekennzeichnet, dass** die Komponente a2) Tetrahydrophthalsäure ist.

**8.** Verfahren zur Herstellung der wässrige Bindemittel-Dispersion gemäß Anspruch 1, **dadurch gekennzeichnet, dass** die Polyesterpolyurethanharze A) durch Umsetzung von Komponenten a) bis d) in 40 bis 99 %iger organischer Lösung hergestellt wird, wobei die Komponenten a), b) und c) in einem organischen Lösemittel vorgelegt und in Gegenwart von 0 bis 2,5 Gew.-% geeigneter Katalysatoren bei Temperaturen von 40 bis 140°C mit Teil d) derart zur Reaktion gebracht werden, dass nach der Umsetzung praktisch keine freien NCO-Gruppen mehr nachweisbar sind und dann das Reaktionsgemisch in Wasser dispergiert oder gelöst wird, wobei die in das Reaktionsprodukt eingeführten Carboxylgruppen während der Umsetzung oder vor bzw. nach des Dispergier- bzw. Löseschritts durch Zugabe einer Base zu 25 bis 100 % in Carboxylatgruppen überführt werden und wobei vor, während oder nach der Herstellung der Dispersion bzw. Lösung das organische Lösemittel gegebenenfalls teilweise oder ganz destillativ aus dem Reaktionsgemisch entfernt wird.

**9.** Wässrige Zweikomponenten(2K)-Lacke, enthaltend die wässrige Bindemittel-Dispersion gemäß Anspruch 1 sowie mindestens ein Vernetzerharz (B).

**10.** Wässrige Zweikomponenten(2K)-Lacke gemäß Anspruch 6, **dadurch gekennzeichnet, dass** Vernetzerharze B) Polyisocyanate mit freien Isocyanatgruppen sind.

**11.** Verwendung der wässrigen Bindemittel-Dispersion gemäß Anspruch 1 zur Herstellung von Raumtemperatur-härtenden oder unter forcierter Trockung bei 30 bis 80 °C ausgehärteten Klar- oder Decklacken.
